# EUROPÄISCHE PATENTSCHRIFT

(11) **EP 1 174 445 B1**
(45) Veröffentlichungstag und Bekanntmachung des Hinweises auf die Patenterteilung: **22.10.2003**
(21) Anmeldenummer: 01114702.2
(22) Anmeldetag: 21.06.2001
(51) Int. Cl.: C08F 218/04

(54) **Verfahren zur Herstellung von Schutzkolloid-stabilisierten Polymerisaten mittels kontinuierlicher Emulsionspolymerisation**
Continuous emulsion polymerisation process for preparing polymers stabilised by protective colloids
Procédé continu de polymérisation en émulsion pour la préparation de polymères stabilisés par des colloides protecteurs

(30) Priorität: 21.07.2000 DE 10035587
(43) Veröffentlichungstag der Anmeldung: 23.01.2002
(60) Teilanmeldung: 03009893.3
(73) Patentinhaber: Wacker Polymer Systems GmbH & Co. KG, 84489 Burghausen (DE)
(72) Erfinder: Weitzel, Hans-Peter Dr., 84571 Reischach (DE)
(74) Vertreter: Schuderer, Michael, Dr.

(56) Entgegenhaltungen:
- EP-A- 0 924 229
- EP-A- 1 067 147
- DE-A- 2 456 576
- US-A- 4 164 489
- PETROCELLI F.P. ET AL: 'Continuous process for the production of vinyl acetate-ethylene emulsion copolymers' MACROMOL. SYMP. Bd. 155, 01 April 2000, Seiten 39 - -51

## Beschreibung

Die Erfindung betrifft ein Verfahren zur Herstellung von Schutzkolloid-stabilisierten Polymerisaten auf Basis von Vinylestern, Ethylen und gegebenenfalls weiteren Comonomeren in Form deren wässrigen Polymerdispersionen oder in Wasser redispergierbaren Polymerpulver mittels kontinuierlicher Emulsionspolymerisation und gegebenenfalls Trocknung der damit erhaltenen wässrigen Polymerdispersionen.

Schutzkolloid-stabilisierte Polymerisate werden vor allem in Form deren wässriger Dispersionen oder in Wasser redispergierbarer Polymerpulver in vielerlei Anwendungen, beispielsweise als Beschichtungsmittel oder Klebemittel, für die unterschiedlichsten Substrate eingesetzt. Als Schutzkolloide werden in der Regel Polyvinylalkohole eingesetzt. Der Einsatz von Polyvinylalkohol ist erstrebenswert, weil dieser im Vergleich zu Systemen, die durch niedermolekulare Verbindungen (Emulgatoren) stabilisiert sind, selbst zur Festigkeit (z.B. Haftzugswerte im Fliesenkleber) beiträgt. Als Monomere zur Herstellung von redispergierbaren Pulvern werden bisher bevorzugt Vinylester und Ethylen eingesetzt, da die Stabilisierung von Acrylatcopolymeren bzw. Styrolacrylatcopolymeren durch Polyvinylalkohol nicht einfach zu bewerkstelligen ist.

Die Herstellung dieser Dispersionen erfolgt traditionell durch Emulsionspolymerisation im Batch- oder Chargenverfahren. Diese Verfahrensweise zeichnet sich durch hohe Flexibilität aus und ist somit vorzugsweise in Anlagen mit großer Produktvielfalt anzutreffen. Außerdem ist diese Vorgehensweise verfahrenstechnisch deutlich weniger anspruchsvoll als ein kontinuierlicher Prozeß. Nachteilig ist die im Vergleich zum kontinuierlichen Prozeß deutlich geringere Wirtschaftlichkeit des Chargenprozeßes.

Der kontinuierliche Prozeß ist somit die richtige Wahl für Anlagen mit hohem Ausstoß bei geringer Produktvielfalt. Kernproblem bei der kontinuierlichen Emulsionspolymerisation ist die Einstellung der richtigen Bedingungen für eine permanente Nukleirung neuer Latexpartikel. Die favorisierte Anlagenkonfiguration ist die Rührkesselkaskade, weil derartige Reaktoren bereits im Batchbetrieb eingesetzt werden und somit mit nur geringem wirtschaftlichen Umrüstungsaufwand für den kontinuierlichen Prozeß verwendbar wären. Üblicherweise findet man ein mehr oder weniger stark ausgeprägtes Oszillieren der Produkteigenschaften und der Verfahrensparameter, die im Extremfall zu nicht verwendbaren Produkten oder Anlagenschädigungen führen können.

Die US-A 2703794 beschreibt ein Verfahren zur kontinuierlichen Emulsionspolymerisation von Vinylacetat und Ethylen in Gegenwart von Emulgator und gegebenenfalls mit Wasser mischbarem organischen Lösungsmittel, wobei Wasser, Emulgator, Monomere und Initiator gleichzeitig und kontinuierlich zudosiert werden. Der Prozeß wird ohne Saatlatex und in einem einzigen Druckreaktor durchgeführt. Nachteilig sind starke Reaktorwandbelegungen und oszillierende Teilchengrößen.

In der US-A 3551396 wird ein Verfahren zur Herstellung von Vinylacetathomopolymerdispersionen in einem Loopreaktor beschrieben, bei dem Monomer und Wasser kontinuierlich im Kreis geführt werden, wobei zusätzliches Monomer und Initiator laufend zudosiert und gebildetes Polymerisat laufend aus dem Reaktor entfernt werden. Die Polymerisation wird ohne Saatlatex und in einem einzigen Druckreaktor durchgeführt.

In der DE-A 2555142 wird ein kontinuierliches Verfahren zur Herstellung von Polymerisaten ethylenisch ungesättigter Monomere nach dem Emulsionspolymerisationsverfahren in mehreren hintereinandergeschalteten Polymerisationsreaktoren beschrieben. Dazu wird ein erster Reaktor mit einer Voremulsion aus Wasser, Initiator, einem Teil der Monomeren und weiteren Hilfsstoffen beschickt, die erhaltene Dispersion in ein zweites Reaktionsgefäß übergeführt, dann der Restanteil der Monomere zugeführt, und schließlich in einem letzten Reaktionsgefäß die Dispersion durch Hinzufügen von weiterem Initiator auspolymerisiert.

In der DE-A 2456576 wird eine Anlagenkonfiguration bestehend aus einem Reaktor für die Hauptpolymerisation und einem Rohr für die Nachpolymerisation beschrieben. Die Polymerisation wird in Gegenwart eines Redoxinitiatorsystems durchgeführt, wobei das Reduktionsmittel in hohem Überschuß eingesetzt wird. Die Monomeren werden so zudosiert, daß deren Konzentration einen definierten Grenzwert nicht übersteigt. Nachteilig bei diesem Verfahren ist die schnelle Wandbelagsbildung, die zu geringen Anlagenverfügbarkeiten führt. Ursache hierfür sind unter anderem die stark oszillierenden Eigenschaften der Produkte.

In der US-A 4164489 wird ein Verfahren zur kontinuierlichen Herstellung von Vinylacetat-Ethylendispersionen beschrieben, das sich durch Verwendung eines Saatlatex der ebenfalls kontinuierlich zugeführt wird, auszeichnet. Nachteilig ist, daß diese Saat ein selbständiges Produkt darstellt, das extra für diesen Zweck hergestellt werden muß (geringe Teilchengröße, ca. 200 nm), wobei nicht gewünschte Rezepturbestandteile wie Emulgatoren in das Produkt eingeschleppt werden.

Petrocelli et.al. (Polym.Sci.Eng., 80, 544 sowie Macromol. Symp. 155, 39 - 51) beschreiben ebenfalls ein Verfahren unter Verwendung von Saatlatex. Auch in diesem Fall wird ein feinteilige (ca. 200 nm Teilchengröße), emulgatorstabilisierte Dispersion verwendet. Der Grundgedanke bei diesem Saatlatexverfahren ist die Einbringung neuer Latexpartikel geringer Größe, die dann im Laufe der Polymerisation zu der gewünschten Teilchengröße anwachsen. Eine interne neue Nukleirung soll durch den Saatlatex unterbunden werden.

Aufgabe der vorliegenden Erfindung war es, einen wirtschaftlichen und technologisch verbesserten Prozeß für die kontinuierliche Herstellung von Vinylester-Ethylen-Copolymerdispersionen zu entwickeln. Es waren dabei Probleme zu berücksichtigen, die nicht nur bei der Herstellung, sondern auch bei der Anwendung der gewünschten Produkte, auftreten können. Insbesondere bei der Anwendung von Polymerisaten in Form deren Redispersionspulver zur Verbesserung der Mörteleigenschaften, einem Haupteinsatzgebiet von Redispersionspulvern, müssen die Rezepturen über eine gewisse Zeit stabil bleiben und dürfen ihre Verarbeitungskonsistenz nicht wesentlich verändern (Viskositäts- bzw. Zementstabilität). In der Beton- und Mörtelindustrie spielen darüberhinaus die mechanischen Eigenschaften, wie die Druckfestigkeit, die Porosität und damit der Luftporengehalt eine wesentliche Rolle. Die mit Dispersionspulver vergüteten hydraulisch abbindenden Systeme sollen zudem noch bessere Haftung gegenüber den unvergüteten Systemen erbringen. Alle diese Produkteigenschaften müssen beim Übergang vom Batchverfahren zum kontinuierlichen Verfahren gewährleistet bleiben.

Überraschenderweise wurde nun gefunden, daß bei Verwendung eines Saatlatex, der zumindest bezüglich der Teilchengröße dem Endprodukt des Prozesses entspricht, ein stabiles kontinuierliches Herstellverfahren für Emulsionspolymerisate erhalten wird. Die Verwendung des Produktes selbst als Saat widerspricht dabei dem Gedanken, die Stabilität des Prozeßes durch geordnetes Teilchenwachstum zu beeinflussen, da die zugeführten Teilchen bereits die Endgröße besitzen und somit weiter anwachsen sollten. Dennoch wird ein stabiler Zustand beobachtet, der keine Oszillation der Teilchengröße und anderer Produkteigenschaften zeigt.

Gegenstand der Erfindung ist ein Verfahren zur Herstellung von mit Polyvinylalkohol stabilisierten Polymerisaten auf Basis von Vinylester, Ethylen und gegebenenfalls weiteren Comonomeren in Form deren wässrigen Polymerdispersionen oder in Wasser redispergierbaren Polymerpulver mittels radikalisch initiierter kontinuierlicher Emulsionspolymerisation und gegebenenfalls Trocknung der dabei erhaltenen Polymerdispersion, wobei die Emulsionspolymerisation
a) in mindestens zwei hintereinandergeschalteten Druckreaktoren bei einer Temperatur von 40°C bis 100°C und einem Druck von 5 bis 100 bar, bis zu einem Restmonomergehalt von kleiner 3 Gew.-% durchgeführt wird und anschließend in mindestens einem Drucklosreaktor bei einer Temperatur von 20°C bis 60°C und einem Druck von < 1.0 bar weitergeführt wird, wobei
b) die Polymerisation mit einem Redoxsystem aus Oxidations- und Reduktionskomponente initiiert wird, wobei die Reduktionskomponente zumindest teilweise im ersten Druckreaktor zugeführt wird, dadurch gekennzeichnet, dass
c) dem ersten Druckreaktor zusätzlich zu den anderen Eduktströmen ein Saatlatex zugeführt wird, welcher dem Endprodukt bezüglich der Teilchengröße Dw entspricht.

Geeignete Vinylester sind solche von Carbonsäuren mit 1 bis 12 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Shell). Besonders bevorzugt ist Vinylacetat. Die genannten Vinylester werden im allgemeinen in einer Menge von 30 bis 90 Gew.-%, bezogen auf das Gesamtgewicht der Monomere, copolymerisiert.

Ethylen wird im allgemeinen in einer Menge von 1 bis 40 Gew.-%, bezogen auf das Gesamtgewicht der Monomere, copolymerisiert.

Geeignete weitere Comonomeren sind solche aus der Gruppe der Ester der Acrylsäure oder Methacrylsäure, der Vinylhalogenide wie Vinylchlorid, der Olefine wie Propylen. Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat. Diese Comonomere werden gegebenenfalls in einer Menge von 1 bis 40 Gew.-%, bezogen auf das Gesamtgewicht der Monomere, copolymerisiert.

Gegebenenfalls können noch 0.05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxyoder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden Comonomergemische von Vinylacetat mit 1 bis 40 Gew.-% Ethylen; sowie
Comonomermischungen von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und
Gemische von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Gemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
sowie Gemische mit Vinylacetat, 1 bis 40 Gew.-% Ethylen und 1 bis 60 Gew.-% Vinylchlorid; wobei
die Gemische noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, daß im allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung erfolgt nach dem Emulsionspolymerisationsverfahren, wobei die Polymerisationstemperatur im allgemeinen 40°C bis 100°C, vorzugsweise 60°C bis 90°C beträgt. Die Initiierung der Polymerisation erfolgt mit den für die Emulsionspolymerisation gebräuchlichen Redox-Initiator-Kombinationen. Beispiele für geeignete Oxidationsinitiatoren sind die Natrium-, Kaliumund Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Bevorzugt werden die Natrium-, Kalium- und Ammoniumsalze der Peroxodischwefelsäure und Wasserstoffperoxid. Die genannten Initiatoren werden im allgemeinen in einer Menge von 0.01 bis 2.0 Gew.-%, bezogen auf das Gesamtgewicht der Monomere, eingesetzt.

Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und (Iso-)Ascorbinsäure. Die Reduktionsmittelmenge beträgt vorzugsweise 0.015 bis 3 Gew.-%, bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Geeignete Schutzkolloide sind teilverseifte oder vollverseifte Polyvinylalkohole. Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Weitere bevorzugte Polyvinylalkohole sind teilverseifte, hydrophobierte Polyvinylalkohole, die durch polymeranaloge Umsetzung, beispielsweise Acetalisierung der Vinylalkoholeinheiten mit C₁- bis C₄-Aldehyden wie Butyraldehyd erhalten werden. Der Anteil der hydrophoben Einheiten beträgt vorzugsweise 0.1 bis 10 Gew.-%, bezogen auf das Gesamtgewicht des teilverseiften Polyvinylacetats. Der Hydrolysegrad beträgt von 80 bis 95 Mol-%, vorzugsweise 85 bis 94 Mol-%, die Höpplerviskosität (DIN 53015, Methode nach Höppler, 4 %-ige wässrige Lösung) von 1 bis 30 mPas, vorzugsweise 2 bis 25 mPas.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich.

Die Polyvinylalkohole werden im allgemeinen in einer Menge von insgesamt 1 bis 20 Gew.-%, bezogen auf das Gesamtgewicht der Monomere, bei der Polymerisation zugesetzt.

Bei dem erfindungsgemäßen Verfahren wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Polymerisation wird in mindestens zwei hintereinandergeschalteten Druckreaktoren durchgeführt und anschließend in mindestens einem Drucklosreaktor weitergeführt. Als Druckreaktoren und Drucklosreaktoren können die herkömmlichen, entsprechend dimensionierten Stahlreaktoren mit Rühreinrichtung, Heiz-/Kühlsystem sowie Leitungen zur Zuführung der Edukte bzw. Abführung der Produkte eingesetzt werden. Die bevorzugte Anlagenkonfiguration besteht aus zwei hintereinandergeschalteten Druckreaktoren und einem oder zwei anschließenden Drucklosreaktoren. Werden mehrere Drucklosreaktoren eingesetzt, können diese sowohl wechselweise (nebeneinander) als auch hintereinander (in Reihe) betrieben werden. Höhere Kaskaden mit mehr als zwei Druckreaktoren können eingesetzt werden, sind aber aufgrund der damit verbundenen stark ansteigenden Komplexität der Anlage nicht immer wünschenswert.

Der Prozeß wird so geführt, daß in allen Druckreaktoren die Summe der eintretenden Masseströme gleich der Summe der austretenden Masseströme ist. Die Drucklosreaktoren werden bevorzugt nebeneinander betrieben und wechselweise benutzt. Der Druck in den hintereinandergeschalteten Druckreaktoren wird so eingestellt, daß vom ersten bis zum letzten der hintereinandergeschalteten Druckreaktoren ein abnehmender Druckgradient resultiert, der den Massefluß in der Druckreaktorkaskade gewährleistet. Der Massetransport vom letzten Druckreaktor in den dahintergeschalteten Drucklosreaktor kann mittels druckgeregelter Ventile oder mittels einer Pumpe in dem Maß erfolgen, wie die Stoffströme in die vorgeschalteten Druckreaktoren zugeführt werden.

Vor Beginn der Polymerisation werden die Druckreaktoren zu 50 bis 80 % des Volumens mit einer Polymerdispersion befüllt, welche dem Endprodukt der Polymerisation bezüglich Copolymerzusammensetzung, Art und Menge des Schutzkolloids sowie Teilchengröße und Festgehalt entspricht. Dies kann so erfolgen, daß in den Druckreaktoren diese Dispersion mittels Batch-Polymerisation hergestellt wird, oder die Druckreaktoren mit einer separat hergestellten Dispersion befüllt werden.

Anschließend werden die Druckreaktoren mit einer solchen Menge an Ethylen beaufschlagt, daß bei einem Druck p1 von vorzugsweise 30 bis 80 bar im ersten Druckreaktor und bei einem Druck p2 von vorzugsweise 10 bis 40 bar im letzten Druckreaktor polymerisiert wird, mit der Maßgabe, daß p1 > p2. Der Ethylendruck wird so reguliert, daß vom ersten bis zum letzten der hintereinandergeschalteten Druckreaktoren ein abnehmender Druckgradient resultiert. Vorzugsweise beträgt die Druckdifferenz zwischen zwei hintereinandergeschalteten Druckreaktoren 2 bis 40 bar. Damit wirkt die Druckdifferenz zwischen den Druckreaktoren als treibende Kraft für den Massefluß bei der kontinuierlichen Polymerisation.

Die Monomere können insgesamt im ersten Druckreaktor zudosiert werden oder auf die Druckreaktoren aufgeteilt werden. Vorzugsweise wird so vorgegangen, daß 50 bis 100 Gew.-%, insbesondere mehr als 70 Gew.-%, bezogen auf das Gesamtgewicht, der Vinylestermonomere und gegebenenfalls weiterer Comonomere, ausgenommen Ethylen, im ersten Druckreaktor zudosiert werden, und der Rest in späteren Druckreaktoren zudosiert wird. Ethylen wird zu mindestens 50 Gew.-% im ersten Druckreaktor vorgelegt. Die Dosierungen können separat (räumlich und zeitlich) durchgeführt werden, oder die zu dosierenden Komponenten können alle oder teilweise voremulgiert dosiert werden.

Dem ersten Druckreaktor wird zusätzlich zu den anderen Eduktströmen ein Saatlatex zugeführt , welcher dem Endprodukt bezüglich der Teilchengröße Dw entspricht, das heißt mit Teilchengröße Dw > 500 nm, vorzugsweise 800 bis 1200 nm. Vorzugsweise sollte der Saatlatex auch eine mit Polyvinylalkohol stabilisierte Vinylester-Ethylen-Dispersion sein. Am meisten bevorzugt ist der Saatlatex identisch mit dem Endprodukt. Identisch bedeutet dabei, daß der Saatlatex dem Endprodukt der Polymerisation bezüglich Copolymerzusammensetzung, Art und Menge des Schutzkolloids sowie Teilchengröße und Festgehalt entspricht. Der Saatlatex kann in einem Batchprozeß hergestellt werden. Vorzugsweise wird so vorgegangen, daß der Saatlatex direkt aus dem letzten Drucklosreaktor über eine Pumpe in der gewünschten Menge in den ersten Druckreaktor zurückgeführt wird.

Die Saatlatexmenge beträgt 0.1 bis 8.0 Gew.-% (fest/fest), bezogen auf den Vinylester-Anteil. Bevorzugt wird sowenig Saatlatex wie nötig eingesetzt, um ein Oszillieren der Teilchengröße und die Wandbelagsbildung in den Reaktoren zu unterdrücken. Bevorzugt sind dies 0.1 bis 3.0 Gew.-%. Die jeweils notwendige Menge hängt dabei von der Monomer- bzw. Polymerzusammensetzung und dem gewählten Schutzkolloidsystem ab. Überraschenderweise wurde zudem gefunden, daß nach dem Einfahren der Polymerisation ab einer Laufzeit von vorzugsweise 15 bis 20 Stunden gänzlich auf die Zufuhr der Saat verzichtet werden kann. In diesem Fall dient die Saat nur dazu, schneller einen stabilen Prozeßzustand zu erreichen. Besonders bevorzugt wird daher eine Fahrweise, bei der die Zugabe von Saatlatex nach 15 bis 20 Stunden nach dem Start der Polymerisation beendet wird.

Der Schutzkolloid-Anteil kann sowohl vollständig im ersten Druckreaktor vorgelegt werden, als auch teilweise im ersten Druckreaktor vorgelegt und der Rest in weiteren Druckreaktoren zudosiert werden. Vorzugsweise werden mindestens 70 Gew.-% des Schutzkolloids im ersten Druckreaktor vorgelegt, besonders bevorzugt wird der Schutzkolloid-Anteil vollständig im ersten Druckreaktor vorgelegt.

Die Polymerisation wird mit einem Redoxsystem aus Oxidationsund Redukticnskomponente initiiert, wobei die Reduktionskomponente vorzugsweise vollständig im ersten Druckreaktor zugeführt wird, und die Oxidationskomponente in allen Druckreaktoren zudosiert wird. Der Monomerumsatz wird mit der Initiatordosierung gesteuert. Die Initiatoren werden insgesamt so zudosiert, daß eine kontinuierliche Polymerisation gewährleistet ist, und die Polymerisation im ersten Druckreaktor bis zu einem Restmonomergehalt von 10 bis 20 Gew.-% und im letzten Druckreaktor bis zu einem Restmonomergehalt von < 3 Gew.-% geführt wird, jeweils bezogen auf das Gesamtgewicht des Ansatzes.

Die bevorzugte Zuführung der Reduktionskomponente ausschließlich im ersten Druckreaktor führt zu einem geringerem Gesamtinitiatorverbrauch und zu besseren mechanischen Eigenschaften der Dispersionsfilme. Insgesamt werden vorzugsweise die Dosierraten der Edukte so eingestellt, daß mittlere Verweilzeiten in der Druckreaktorkaskade von insgesamt 60 bis 180 Minuten resultieren.

Nach Abschluß der Polymerisation in den Druckreaktoren wird zur Restmonomerentfernung in Anwendung bekannter Methoden im Drucklosreaktor nachpolymerisiert, im allgemeinen durch mit Redoxkatalysator initiierter Nachpolymerisation. In den Drucklosreaktoren werden daher beide Initiatorkomponenten im nötigen Maße für die Endkonfektionierung zugegeben. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 50 bis 60 Gew.-%. Zur Herstellung der in Wasser redispergierbaren Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, daß ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Dispersionspulverzusammensetzungen sind beispielsweise Pigmente, Füllstoffe, Schaumstabilisatoren, Hydrophobierungsmittel.

Die wässrigen Polymerdispersionen und die in Wasser redispergierbaren, schutzkolloidstabilisierten Polymerpulver können in den dafür typischen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben. Ferner als Bindemittel für Beschichtungsmittel und Klebemittel oder als Beschichtungs- bzw. Bindemittel für Textilien und Papier.

Die Verwendung des Endproduktes selbst als Saatlatex bringt neben den bereits genannten noch weitere Vorteile mit sich: Es muß keine separate Saatdispersion hergestellt, gelagert und bereitgestellt (Leitungen, Pumpen, etc.) werden. Es werden keine rezepturfremden Bestandteile in das Produkt eingeschleppt. Es gibt keine zusätzlichen logistischen Probleme, da die Saat im bevorzugten Fall direkt aus dem letzten Drucklosreaktor über eine kleine Pumpe in der gewünschten Menge in den ersten Druckreaktor zurückgeführt werden kann. Die Netto-Produktionsleistung wird nicht durch die extern bereitzustellende Saat geschmälert.

Die nachfolgenden Beispiele dienen der weiteren Erläuterung der Erfindung:

### Beispiel 1:

In einen Druckreaktor R1 mit 5 Liter Volumen wurden 4.0 kg einer wässrigen Dispersion eines Vinylacetat-Ethylen-Copolymerisats mit 83 Gew.-% Vinylacetat und 17 Gew.-% Ethylen, welche mit 7 Gew.-%, bezogen auf das Copolymerisat, eines Polyvinylalkohols mit einem Hydrolysegrad von 88 Mol-% und einer Viskosität nach Höppler von 4 mPas stabilisiert war, vorgelegt. Zusätzlich wurden 500 g Vinylacetat und 200 g einer 20 %-igen, wässrigen Lösung eines Polyvinylalkohols mit einem Hydrolysegrad von 88 Mol-% und einer Viskosität nach Höppler von 4 mPas vorgelegt. Dieser Reaktor R1 war mit einem Druckreaktor R2 gleicher Größe verbunden, der ebenfalls mit Dispersion gefüllt wurde. Beide Reaktoren wurden mit Ethylen beaufschlagt, wobei der Druck im ersten Reaktor 70 bar betrug und im zweiten Reaktor 35 bar. Treibende Kraft für den Massefluß war somit die Druckdifferenz. Aus dem zweiten Druckreaktor wurde die Dispersion mittels einer Pumpe in dem Maß abgenommen, wie die Stoffströme über die Dosierungen in beiden Reaktoren zugeführt wurden.

Beide Reaktoren wurden auf 65°C aufgeheizt, anschließend wurden die Initiatordosierungen, Kaliumpersulfat (3 Gew.-%-ige Lösung in Wasser) und Brüggolit (1.5 Gew.-%-ige Lösung in Wasser), gestartet (im Reaktor R1 mit je 25 ml/h, im Reaktor R2 mit je 60 ml/h). Bei Reaktionsbeginn, erkennbar am Anstieg der Temperatur, wurden die weiteren Dosierungen in den Reaktor R1 gestartet: Vinylacetat mit 1000 g/h, Polyvinylalkohol mit 1200 g/h und Dispersion mit 30 g/h. Ethylen wurde mit einer Rate von 320 g/h bei 70 bar im Reaktor R1 nachdosiert.
Die fertige Dispersion wurde mittels einer Pumpe aus dem Druckreaktor R2 in einen drucklosen Reaktor R3 gefördert und dort mit 20 ml t-Butylhydroperoxid (10 Gew.-%-ige Lösung in Wasser) und 20 ml Brüggolit (10 Gew.-%-ige Lösung in Wasser) je 10 kg Dispersion nachpolymerisiert.
Die Polymerisation wurde über eine Dauer von 20 Stunden durchgeführt.

Man erhielt eine Dispersion mit einem Feststoffgehalt von 50.3 %, einer Viskosität von 150 mPas (Brookfield 20 bei 23°C), einem pH-Wert von 4.1 und einem Teilchengrößendurchmesser Dw von 1130 nm. Die Teilchengrößenverteilung war über die Dauer des Experimentes stabil. Es wurde keine Wandbelagsbildung beobachtet. Der Siebrückstand beim Sieben über 250 µm betrug 350 ppm (mg/kg). Der K-Wert betrug 105. Das freie Restmonomer betrug < 300 ppm. Die Dispersion war im Zement stabil.

### Beispiel 2:

Die Polymerisation erfolgt in gleicher Weise wie in Beispiel 1, mit dem Unterschied, daß die Reduktionskomponente Brüggolit ausschließlich im Reaktor R1, mit einer Rate von 80 g/h zugegeben wurde.
Man erhielt eine Dispersion mit einem Feststoffgehalt von 50.0 %, einer Viskosität von 140 mPas (Brookfield 20 bei 23°C), einem pH-Wert von 4.1 und einem Teilchengrößendurchmesser Dw von 1050 nm. Die Teilchengrößenverteilung war über die Dauer des Experimentes stabil. Es wurde keine Wandbelagsbildung beobachtet. Der Siebrückstand beim Sieben über 250 um betrug 150 ppm. Das freie Restmonomer betrug < 500 ppm. Die Dispersion war im Zement stabil.

### Beispiel 3:

Die Polymerisation erfolgt in gleicher Weise wie in Beispiel 1, mit dem Unterschied, daß die Dispersion in den Reaktor R1 nur mit der halben Rate, nämlich nur 15 g/h, zudosiert wurde.
Man erhielt eine Dispersion mit einem Feststoffgehalt von 50.6 %, einer Viskosität von 135 mPas (Brookfield 20 bei 23°C), einem pH-Wert von 4.0 und einem Teilchengrößendurchmesser Dw von 1130 nm. Die Teilchengrößenverteilung war über die Dauer des Experimentes stabil. Es wurde keine Wandbelagsbildung beobachtet.

Der Siebrückstand beim Sieben über 250 µm betrug 280 ppm. Das freie Restmonomer betrug < 500 ppm. Die Dispersion war im Zement stabil.

### Beispiel 4:

Die Polymerisation erfolgt in gleicher Weise wie in Beispiel 1. Nach 15 Stunden Laufzeit wurde auf die Saatdosierung verzichtet. In den nächsten 20 Stunden wurde ohne Saatzugabe polymerisiert.
Man erhielt eine Dispersion mit einem Feststoffgehalt von 50.3 %, einer Viskosität von 165 mPas (Brookfield 20 bei 23°C), einem pH-Wert von 4.2 und einem Teilchengrößendurchmesser Dw von 1250 nm. Die Teilchengrößenverteilung war über die Dauer des Experimentes stabil. Es wurde keine Wandbelagsbildung beobachtet. Der Siebrückstand beim Sieben über 250 um betrug 150 ppm. Das freie Restmonomer betrug < 500 ppm. Die Dispersion war im Zement stabil.

### Beispiel 5:

Die Polymerisation erfolgt in gleicher Weise wie in Beispiel 1, mit dem Unterschied, daß in den Reaktor R1 keine Dispersion als Saatlatex zudosiert wurde.
Man erhielt eine Dispersion mit einem Feststoffgehalt von 50.8 %, einer Viskosität von 180 mPas (Brookfield 20 bei 23°C), einem pH-Wert von 4.1. Die Teilchengrößenverteilung oszilliert zwischen zwei Zuständen: monomodal ca. 1500 nm und bimodal ca. 400 nm/2200 nm. Der Siebrückstand beim Sieben über 250 um betrug 350 ppm (mg/kg). Der K-Wert betrug 105. Das freie Restmonomer betrug < 300 ppm. Die Dispersion war im Zement stabil.

### Vergleichsbeispiel 6:

Die Polymerisation erfolgt in gleicher Weise wie in Beispiel 1, mit dem Unterschied, daß in den Reaktor R1 als Saatlatex nicht das Polymerisationsprodukt, sondern eine feinteilige (300 nm), emulgatorstabilisierte Vinylacetat-Ethylen-Dispersion zudosiert wurde.
Man erhielt eine Dispersion mit einem Feststoffgehalt von 50.2 %, einer Viskosität von 110 mPas (Brookfield 20 bei 23°C), einem pH-Wert von 4.2 und einem Teilchengrößendurchmesser Dw von 950 nm. Die Teilchengrößenverteilung war über die Dauer des Experimentes stabil. Es wurde keine Wandbelagsbildung beobachtet. Der Siebrückstand beim Sieben über 250 µm betrug 220 ppm (mg/kg). Der K-Wert betrug 105. Das freie Restmonomer betrug < 300 ppm. Die Dispersion war im Zement instabil.

### Vergleichsbeispiel 7:

Als Vergleich wurde eine Dispersion mit identischer Zusammensetzung verwendet, die in einem Chargenverfahren hergestellt wurde. Die Dispersion bestand aus einem Vinylacetat-Ethylen-Copolymerisat mit 83 Gew.-% Vinylacetat und 17 Gew.-% Ethylen, und war mit 7 Gew.-%, bezogen auf das Copolymerisat, eines Polyvinylalkohols mit einem Hydrolysegrad von 88 Mol-% und einer Viskosität nach Höppler von 4 mPas stabilisiert.
Diese Dispersion wurde gleichzeitig als Säatdispersion in den Beispielen 1 bis 4 verwendet.

### Pulverherstellung:

Die Dispersionen aus den Beispielen 1 bis 5 und den Vergleichsbeispielen 6 bis 7 wurden mit 5 Gew.-% (fest/fest) Polyvinylalkohol mit einem Hydrolysegrad von 88 Mol-% und einer Viskosität nach Höppler von 4 mPas versetzt und mit Wasser auf eine Verdüsungsviskosität von 250 mPas verdünnt. Die Dispersion wurde dann mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Redispergierverhalten der Polymerfilme:

Aus den Dispersionen der genannten Beispielen (vor Sprühtrocknung) wurden auf Glasplatten 0.2 mm dicke Filme hergestellt und diese 15 Minuten bei 105°C getrocknet. Zur Überprüfung der Filmredispergierbarkeit wurde bei Raumtemperatur mit einer Pipette jeweils ein Wassertropfen auf eine homogene Stelle des zu prüfenden Filmes aufgebracht, und nach 60 Sekunden Einwirkzeit der Wassertropfen mit der Fingerkuppe so lange an der gleichen Stelle verrieben, bis die Glasplatte an dieser Stelle filmfrei war, der Film in Filmstücke zerfiel oder vollständig erhalten blieb.
Die Redispergierbarkeit der Polymerfilme wurde mit folgendem Bewertungsschema beurteilt:
Note 1: Film läßt sich durch leichtes Reiben sofort redispergieren oder redispergiert bereits selbständig;
Note 2: Film läßt sich durch Reiben redispergieren, wenig redispergierbare Filmstücke möglich;
Note 3: Film läßt sich nur durch kräftiges Reiben unter Bildung von Filmstücken redispergieren;
Note 4: Film läßt sich auch durch längeres kräftiges Reiben nicht redispergieren, sondern zerfällt in Filmstücke.

### Bestimmung des Absitzverhaltens der Pulver (Röhrenabsitz):

Zur Bestimmung des Absitzverhaltens wurden jeweils 50 g des Dispersionspulvers in 50 ml Wasser redispergiert, danach auf 0.5 % Festgehalt verdünnt und 100 ml dieser Redispersion in eine graduierte Röhre gefüllt und das Absetzen nach 1 Stunde gemessen.

### Bestimmung der Blockfestigkeit:

Zur Bestimmung der Blockfestigkeit wurde das Dispersionspulver in ein Eisenrohr mit Verschraubung gefüllt und danach mit einem Metallstempel belastet. Nach Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulver bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung der Zementstabilität:

Es wurde eine Zementmischung der nachfolgenden Rezeptur angerührt:

| | |
|---|---|
| Portlandzement | 82.5 g |
| Calcit (CaCO₃) 10-40 mm | 75 g |
| Quarzsand 200-500 mm | 142 g |
| Dispersionspulver | 14.5 g |
| Wasser | 85 g |

Die Verarbeitbarkeit der Zementmischung wurde über einen Zeitraum von 2 Stunden beobachtet und qualitativ beurteilt.

Die Prüfergebnisse sind in Tabelle 1 zusammengefaßt.

**Tabelle 1:**

| Bsp. | Redispergierbarkeit | Röhrenabsitz [cm] | Blockfestigkeit | Zementstabilität |
|---|---|---|---|---|
| Bsp. 1 | 1 | 1.5 | 1 | Stabil |
| Bsp. 2 | 1 | 2.0 | 1 | Stabil |
| Bsp. 3 | 1 | 1.0 | 1 | Stabil |
| Bsp. 4 | 1 | 1.5 | 1 | Stabil |
| Bsp. 5 | 1 | 2.5 | 1-2 | Stabil |
| V.bsp. 6 | 2 | 3.5 | 1-2 | instabil |
| V.bsp. 7 | 1 | 1.0 | 1 | Stabil |

Mit der erfindungsgemäßen Verfahrensweise können Produkte mit vergleichbarer Block- und somit Lagerstabilität der Pulver erzielt werden, wie bei Vinylacetat-Ethylen-Pulvern, welche mit einem dem Standard entsprechenden Chargenprozeß hergestellt wurden. Auch die Redispergierbarkeit und die Zementstabilität ist vergleichbar.

Haftzugfestigkeiten im Fliesenkleber wurden in folgender Rezeptur überprüft (6 Gew.-% Pulveranteil):

| | |
|---|---|
| Quarzsand | 586 Teile |
| Portlandzement | 350 Teile |
| Cellulose | 4 Teile |
| Dispersionspulver | 60 Teile |

Es wurden die Haftzugfestigkeiten nach 4 Lagerbedingungen bestimmt:

| | |
|---|---|
| 28T | 28 Tage Trockenlagerung |
| 7T/21N | 7 Tage Trockenlagerung/21 Tage Naßlagerung |
| 14T/14TS+70°C/1T | Wärmelagerung |
| Frost-Tau | Frost-Tau-Lagerung |

Die Ergebnisse sind in Tabelle 2 zusammengefaßt.

**Tabelle 2:**

| Bsp. | RD % | RF N/mm² | 28T N/mm² | 7T/21N N/mm² | 14T/14TS+70/1T N/mm² | Frost-Tau N/mm² |
|---|---|---|---|---|---|---|
| Bsp. 1 | 751 | 6.2 | 1.65 | 0.91 | 1.44 | 0.88 |
| Bsp. 2 | 885 | 7.3 | 1.43 | 0.92 | 1.28 | 0.86 |
| Bsp. 3 | 722 | 6.4 | 1.56 | 0.88 | 1.33 | 0.89 |
| Bsp. 4 | 663 | 6.8 | 1.45 | 0.92 | 1.42 | 0.94 |
| Bsp. 5 | 625 | 6.5 | 1.35 | 0.85 | 1.38 | 0.87 |
| V.bsp. 6 | 640 | 6.0 | 1.32 | 0.67 | 1.22 | 0.65 |
| V.bsp. 7 | 720 | 6.5 | 1.54 | 0.97 | 1.32 | 0.85 |

Diskussion der Ergebnisse aus Tabelle 2:

Die erfindungsgemäßen Pulver zeigen im Vergleich zu dem Pulver aus Vergleichsbeispiel 7 (Chargenprozeß) ein vergleichbares Eigenschaftsprofil über alle Lagerbedingungen. Das Pulver aus Vergleichsbeispiel 6 (emulgatorstabilisierte Dispersion als Saatlatex) ist schwach bei den Naßlagerungen sowie der Frost-Tau-Lagerung (Beeinflußung der Eigenschaften durch den Emulgator).

## Patentansprüche

1. Verfahren zur Herstellung von mit Polyvinylalkohol stabilisierten Polymerisaten auf Basis von Vinylester, Ethylen und gegebenenfalls weiteren Comonomeren in Form deren wässrigen Polymerdispersionen oder in Wasser redispergierbaren Polymerpulver mittels radikalisch initiierter kontinuierlicher Emulsionspolymerisation und gegebenenfalls Trocknung der dabei erhaltenen Polymerdispersion, **wobei** die Emulsionspolymerisation
a) in mindestens zwei hintereinandergeschalteten Druckreaktoren bei einer Temperatur von 40°C bis 100°C und einem Druck von 5 bis 100 bar, bis zu einem Restmonomergehalt von kleiner 3 Gew.-% durchgeführt wird und anschließend in mindestens einem Drucklosreaktor bei einer Temperatur von 20°C bis 60°C und einem Druck von < 1.0 bar weitergeführt wird, wobei
b) die Polymerisation mit einem Redoxsystem aus Oxidationsund Reduktionskomponente initiiert wird, wobei die Reduktionskomponente zumindest teilweise im ersten Druckreaktor zugeführt wird, **dadurch gekennzeichnet, dass**
c) dem ersten Druckreaktor zusätzlich zu den anderen Eduktströmen ein Saatlatex zugeführt wird, welcher dem Endprodukt bezüglich der Teilchengröße Dw entspricht.

2. Verfahren nach Anspruch 1, **dadurch gekennzeichnet, daß** der Saatlatex eine mit Polyvinylalkohol stabilisierte Vinylester-Ethylen-Dispersion ist.

3. Verfahren nach Anspruch 2, **dadurch gekennzeichnet, daß** der Saatlatex dem Endprodukt der Polymerisation bezüglich Copolymerzusammensetzung, Art und Menge des Schutzkolloids sowie Teilchengröße und Festgehalt entspricht.

4. Verfahren nach Anspruch 1 bis 3, **dadurch gekennzeichnet, daß** die Saatlatexmenge 0.1 bis 8.0 Gew.-% (fest/fest), bezogen auf den Vinylester-Anteil, beträgt.

5. Verfahren nach Anspruch 1 bis 4, **dadurch gekennzeichnet, daß** ab einer Laufzeit der Polymerisation von 15 bis 20 Stunden auf die Zufuhr des Saatlatex verzichtet wird.

6. Verfahren nach Anspruch 1 bis 5, **dadurch gekennzeichnet, daß** die Reduktionskomponente vollständig im ersten Druckreaktor zugeführt wird.

7. Verfahren nach Anspruch 1 bis 6, **dadurch gekennzeichnet, daß** die Polymerisation in zwei hintereinandergeschalteten Druckreaktoren und daran anschließend ein oder zwei Drucklosreaktoren durchgeführt wird.

8. Verfahren nach Anspruch 1 bis 7, **dadurch gekennzeichnet, daß** ein oder mehrere Vinylester von Carbonsäuren mit 1 bis 12 C-Atomen in einer Menge von 30 bis 90 Gew.-%, Ethylen in einer Menge von 1 bis 40 Gew.-%, jeweils bezogen auf das Gesamtgewicht der Monomere, gegebenenfalls mit einem oder mehreren weiteren Comonomeren aus der Gruppe umfassend Ester der Acrylsäure oder Methacrylsäure, der Vinylhalogenide oder der Olefine copolymerisiert werden.

9. Verfahren nach Anspruch 1 bis 8, **dadurch gekennzeichnet, daß** Comonomergemische von Vinylacetat mit 1 bis 40 Gew.-% Ethylen; oder
Comonomermischungen von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest; oder
Gemische von Vinylacetat, 1 bis 40 Gew.-% Ethylen und 1 bis 60 Gew.-% Acrylsäureester von unverzweigten oder verzweigten Alkoholen mit 1 bis 15 C-Atomen; oder
Gemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, welche noch 1 bis 40 Gew.-% Ethylen enthalten; oder
Gemische mit Vinylacetat, 1 bis 40 Gew.-% Ethylen und 1 bis 60 Gew.-% Vinylchlorid copolymerisiert werden;
wobei die Gemische noch Hilfsmonomere enthalten können, und sich die Angaben in Gew.-% auf jeweils 100 Gew.-% aufaddieren.

10. Verfahren nach Anspruch 1 bis 9, **dadurch gekennzeichnet, daß** als Schutzkolloide ein oder mehrere aus der Gruppe der teilverseiften Polyvinylalkohole mit einem Hydrolysegrad von 80 bis 95 Mol-% und einer Höpplerviskosität, in 4 %-iger wässriger Lösung von 1 bis 30 mPas eingesetzt werden.

11. Verfahren nach Anspruch 1 bis 10, **dadurch gekennzeichnet, daß** die Druckreaktoren mit einer solchen Menge an Ethylen beaufschlagt werden, daß bei einem Druck von 30 bis 80 bar im ersten Druckreaktor und bei einem Druck von 10 bis 40 bar im letzten Druckreaktor polymerisiert wird, und der
Ethylendruck so reguliert wird, daß vom ersten bis zum letzten der hintereinandergeschalteten Druckreaktoren ein abnehmender Druckgradient resultiert.

12. Verfahren nach Anspruch 1 bis 11, **dadurch gekennzeichnet, daß** 50 bis 100 Gew.-%, bezogen auf das Gesamtgewicht, der Vinylestermonomere und gegebenenfalls weiterer Comonomere, ausgenommen Ethylen, im ersten Druckreaktor zudosiert werden, der Rest in späteren Druckreaktoren zudosiert wird, und Ethylen zu mindestens 50 Gew.-% im ersten Druckreaktor vorgelegt wird.

13. Verfahren nach Anspruch 1 bis 12, **dadurch gekennzeichnet, daß** mindestens 70 Gew.-% des Schutzkolloids im ersten Druckreaktor vorgelegt werden.

14. Verfahren nach Anspruch 1 bis 13, **dadurch gekennzeichnet, daß** die Initiatoren so zudosiert werden, daß die Polymerisation im ersten Druckreaktor bis zu einem Restmonomergehalt von 10 bis 20 Gew.-% und im letzten Druckreaktor bis zu einem Restmonomergehalt von < 3 Gew.-% geführt wird, jeweils bezogen auf das Gesamtgewicht des Ansatzes.

15. Verfahren nach Anspruch 1 bis 14, **dadurch gekennzeichnet, daß** bei mittleren Verweilzeiten in den Druckreaktoren von 60 bis 180 Minuten polymerisiert wird.

16. Verfahren nach Anspruch 1 bis 15, **dadurch gekennzeichnet, daß** die damit erhaltenen wässrigen Dispersion, gegebenenfalls nach Zugabe weiterer Schutzkolloide als Verdüsungshilfe, mittels Sprühtrocknung getrocknet werden.

## Claims

1. Process for preparing polyvinyl-alcohol-stabilized polymers based on vinyl esters and ethylene and, where appropriate, on other comonomers, in the form of their aqueous polymer dispersions or water-redispersible polymer powders, by means of free-radical-initiated continuous emulsion polymerization and, where appropriate, drying the resultant polymer dispersion, where
a) the emulsion polymerization is carried out in at least two pressurized reactors arranged in series at a temperature of from 40 to 100°C and at a pressure of from 5 to 100 bar, to a residual monomer content of less than 3% by weight, and then the polymerization is continued in at least one unpressurized reactor at a temperature of from 20 to 60°C and at a pressure of < 1.0 bar, where
b) the polymerization is initiated using a redox system made from oxidizing component and reducing component, where at least part of the reducing component is introduced within the first pressurized reactor, **characterized in that**
c) the materials introduced within the first pressurized reactor include, in addition to the other starting material streams, a seed latex whose particle size Dw corresponds to that of the final product.

2. Process according to Claim 1, **characterized in that** the seed latex is a polyvinyl-alcohol-stabilized vinyl ester-ethylene dispersion.

3. Process according to Claim 2, **characterized in that** the seed latex corresponds to the final product of the polymerization with respect to copolymer makeup, the nature and the amount of the protective colloid, and the particle size and solid content.

4. Process according to any of Claims 1 to 3, **characterized in that** the amount of seed latex is from 0.1 to 8.0% by weight (solids/solids), based on the amount of vinyl ester.

5. Process according to any of Claims 1 to 4, **characterized in that** the feed of the seed latex is dispensed with once the running time of the polymerization is greater than from 15 to 20 hours.

6. Process according to any of Claims 1 to 5, **characterized in that** all of the reducing component is introduced within the first pressurized reactor.

7. Process according to any of Claims 1 to 6, **characterized in that** the polymerization is carried out in two pressurized reactors arranged in series and then in one or two unpressurized reactor(s).

8. Process according to any of Claims 1 to 7, **characterized in that** from 30 to 90% by weight of one or more vinyl esters of carboxylic acids having from 1 to 12 carbon atoms, and from 1 to 40% by weight of ethylene, in each case based on the total weight of the monomers, are copolymerized, where appropriate with one or more other comonomers selected from the group consisting of esters of acrylic acid or methacrylic acid, vinyl halides, and olefins.

9. Process according to any of Claims 1 to 8, **characterized in that** the materials copolymerized are comonomer mixtures of vinyl acetate with from 1 to 40% by weight of ethylene; or
comonomer mixtures of vinyl acetate with from 1 to 40% by weight of ethylene, and with from 1 to 50% by weight of one or more other comonomers selected from the group consisting of vinyl esters having from 1 to 12 carbon atoms in the carboxylic acid residue; or
mixtures of vinyl acetate, from 1 to 40% by weight of ethylene, and from 1 to 60% by weight of acrylic esters of unbranched or of branched alcohols having from 1 to 15 carbon atoms; or
mixtures with from 30 to 75% by weight of vinyl acetate, from 1 to 30% by weight of vinyl laurate or vinyl esters of an alpha-branched carboxylic acid having from 9 to 11 carbon atoms, and also from 1 to 30% by weight of acrylic esters of unbranched or branched alcohols having from 1 to 15 carbon atoms, which also contain from 1 to 40% by weight of ethylene; or
mixtures with vinyl acetate, from 1 to 40% by weight of ethylene, and from 1 to 60% by weight of vinyl chloride;
where the mixtures may also comprise auxiliary monomers, and the % by weight data always give 100% in total.

10. Process according to any of Claims 1 to 9, **characterized in that** the protective colloids used comprise one or more selected from the group consisting of partially hydrolyzed polyvinyl alcohols with a degree of hydrolysis of from 80 to 95 mol% and with a Höppler viscosity of from 1 to 30 mPas in 4% strength aqueous solution.

11. Process according to any of Claims 1 to 10, **characterized in that** the amount of ethylene supplied to the pressurized reactors is such that the polymerization is carried out at a pressure of from 30 to 80 bar in the first pressurized reactor and at a pressure of from 10 to 40 bar in the final pressurized reactor, and the regulation of the ethylene pressure is such as to give a falling pressure gradient from the first to the final reactor of the pressurized reactors arranged in series.

12. Process according to any of Claims 1 to 11, **characterized in that**, based on the total weight, from 50 to 100% by weight of the vinyl ester monomers and any other comonomers used, other than ethylene, is metered in within the pressurized reactor, and the remainder is metered in within subsequent pressurized reactors, and the initial charge in the first pressurized reactor comprises at least 50% by weight of the ethylene.

13. Process according to any of Claims 1 to 12, **characterized in that** at least 70% by weight of the protective colloid forms an initial charge in the first pressurized reactor.

14. Process according to any of Claims 1 to 13, **characterized in that** the manner of metering in the initiators is such that the polymerization in the first pressurized reactor proceeds to a residual monomer content of from 10 to 20% by weight and that in the final pressurized reactor proceeds to a residual monomer content of < 3% by weight, based in each case on the total weight of the batch.

15. Process according to any of Claims 1 to 14, **characterized in that** the average residence times in the pressurized reactors in the polymerization are from 60 to 180 minutes.

16. Process according to any of Claims 1 to 15, **characterized in that** the resultant aqueous dispersion is dried by spray drying, where appropriate after addition of other protective colloids as a spraying aid.

## Revendications

1. Procédé pour la préparation de polymères stabilisés avec du poly(alcool vinylique), à base d'ester vinylique, d'éthylène et éventuellement d'autres comonomères, sous forme de leurs dispersions aqueuses de polymère ou de poudres de polymère redispersables dans l'eau, par polymérisation continue en émulsion à amorçage radicalaire, et éventuellement séchage de la dispersion de polymère ainsi obtenue, la polymérisation en émulsion
a) étant effectuée dans au moins deux réacteurs sous pression, raccordés l'un à la suite de l'autre, à une température de 40°C à 100°C et sous une pression de 5 à 100 bars, jusqu'à une teneur en monomères résiduels de moins de 3 % en poids, et ensuite poursuivie dans au moins un réacteur sans pression, à une température de 20°C à 60°C et sous une pression de <1.0,
b) la polymérisation étant amorcée à l'aide d'un système redox à base d'un composant réducteur et d'un composant oxydant, le composant réducteur étant envoyé au moins en partie dans le premier réacteur sous pression, **caractérisé en ce que**
c) en plus des autres courants de produits de départ, on envoie au premier réacteur sous pression un latex d'ensemencement qui correspond au produit final en ce qui concerne la taille de particule Dw.

2. Procédé selon la revendication 1, **caractérisé en ce que** le latex d'ensemencement est une dispersion d'ester vinylique-éthylène stabilisée avec du poly(alcool vinylique).

3. Procédé selon la revendication 2, **caractérisé en ce que** le latex d'ensemencement correspond au produit final de la polymérisation, en ce qui concerne la composition du copolymère, la nature et la quantité du colloïde protecteur ainsi que la taille de particule et la teneur en matière solide.

4. Procédé selon l'une quelconque des revendications 1 à 3, **caractérisé en ce que** la quantité de latex d'ensemencement va de 0,1 à 8,0 % en poids (solide/solide), par rapport à la quantité d'ester vinylique.

5. Procédé selon l'une quelconque des revendications 1 à 4, **caractérisé en ce que** l'addition du latex d'ensemencement est arrêtée après écoulement d'un temps de polymérisation de 15 à 20 heures.

6. Procédé selon l'une quelconque des revendications 1 à 5, **caractérisé en ce que** le composant réducteur est envoyé en totalité dans le premier réacteur sous pression.

7. Procédé selon l'une quelconque des revendications 1 à 6, **caractérisé en ce que** la polymérisation est effectuée dans deux réacteurs sous pression, raccordés l'un à la suite de l'autre et ensuite dans un ou deux réacteurs sans pression.

8. Procédé selon l'une quelconque des revendications 1 à 7, **caractérisé en ce que** sont copolymérisés un ou plusieurs esters vinyliques d'acides carboxyliques ayant de 1 à 12 atomes de carbone, en une quantité de 30 à 90 % en poids, de l'éthylène en une quantité de 1 à 40 % en poids, chaque fois par rapport au poids total des monomères, éventuellement avec un ou plusieurs autres comonomères choisis dans le groupe comprenant des esters de l'acide acrylique ou de l'acide méthacrylique, des halogénures de vinyle et des oléfines.

9. Procédé selon l'une quelconque des revendications 1 à 8, **caractérisé en ce que** sont copolymérisés des mélanges de comonomères constitués d'acétate de vinyle avec 1 à 40 % en poids d'éthylène ; ou des mélanges de comonomères constitués d'acétate de vinyle avec 1 à 40 % en poids d'éthylène et 1 à 50 % en poids d'un ou plusieurs autres comonomères choisis dans le groupe des esters vinyliques ayant de 1 à 12 atomes de carbone dans le reste d'acide carboxylique ; ou des mélanges d'acétate de vinyle, de 1 à 40 % en poids d'éthylène et de 1 à 60 % en poids d'ester d'acide acrylique avec des alcools ramifiés ou non ramifiés ayant de 1 à 15 atomes de carbone ; ou des mélanges comportant 30 à 75 % en poids d'acétate de vinyle, 1 à 30 % en poids de laurate de vinyle ou d'ester vinylique d'un acide carboxylique α-ramifié ayant de 9 à 11 atomes de carbone, ainsi que 1 à 30 % en poids d'ester d'acide acrylique avec des alcools ramifiés ou non ramifiés ayant de 1 à 15 atomes de carbone, qui contiennent encore 1 à 40 % en poids d'éthylène ; ou
des mélanges avec l'acétate de vinyle, 1 à 40 % en poids d'éthylène et 1 à 60 % en poids de chlorure de vinyle ;
les mélanges pouvant contenir encore des monomères auxiliaires et les données en % en poids s'ajoutant chaque fois pour donner 100 % en poids.

10. Procédé selon l'une quelconque des revendications 1 à 9, **caractérisé en ce qu'**on ajoute en tant que colloïdes protecteurs un ou plusieurs composés choisis dans le groupe des poly(alcool vinylique)s partiellement saponifiés ayant un degré d'hydrolyse de 80 à 95 % en moles et une viscosité Höppler, en solution aqueuse à 4 %, de 1 à 30 mPa.s.

11. Procédé selon l'une quelconque des revendications 1 à 10, **caractérisé en ce que** les réacteurs sous pression sont chargés avec une quantité d'éthylène telle que la polymérisation s'effectue sous une pression de 30 à 80 bars dans le premier réacteur sous pression et sous une pression de 10 à 40 bars dans le dernier réacteur sous pression, et la pression d'éthylène est régulée de manière qu'il en résulte un gradient décroissant de pression du premier au dernier des réacteurs sous pression raccordés les uns à la suite des autres.

12. Procédé selon l'une quelconque des revendications 1 à 11, **caractérisé en ce qu'**on introduit de façon réglée dans le premier réacteur sous pression 50 à 100 % en poids, par rapport au poids total, des monomères ester vinylique et éventuellement d'autres comonomères, à l'exception de l'éthylène, on introduit de façon réglée le reste dans les réacteurs sous pression disposés à la suite, et l'éthylène est disposé au préalable à raison d'au moins 50 % en poids dans le premier réacteur sous pression.

13. Procédé selon l'une quelconque des revendications 1 à 12, **caractérisé en ce qu'**au moins 70 % en poids du colloïde protecteur sont disposés au préalable dans le premier réacteur sous pression.

14. Procédé selon l'une quelconque des revendications 1 à 13, **caractérisé en ce que** les amorceurs sont ajoutés de façon réglée de telle façon que la polymérisation est conduite dans le premier réacteur sous pression jusqu'à une teneur en monomères résiduels de 10 à 20 % en poids et dans le dernier réacteur sous pression jusqu'à une teneur en monomères résiduels de < 3 % en poids, chaque fois par rapport au poids total de la charge de départ.

15. Procédé selon l'une quelconque des revendications 1 à 14, **caractérisé en ce que** la polymérisation s'effectue à des temps moyens de séjour dans les réacteurs sous pression de 60 à 180 minutes.

16. Procédé selon l'une quelconque des revendications 1 à 15, **caractérisé en ce que** les dispersions aqueuses ainsi obtenues, éventuellement après addition d'autres colloïdes protecteurs en tant qu'adjuvants de pulvérisation, sont séchées par séchage par atomisation.
